(19) Europäisches Patentamt
European Patent Office
Office européen des brevets

(11) **EP 1 633 792 B1**

(12) **EUROPEAN PATENT SPECIFICATION**

(45) Date of publication and mention of the grant of the patent:
**28.11.2007 Bulletin 2007/48**

(21) Application number: **04752749.4**

(22) Date of filing: **20.05.2004**

(51) Int Cl.:
*C08F 10/02* $^{(2006.01)}$     *C08F 10/00* $^{(2006.01)}$

(86) International application number:
**PCT/US2004/015792**

(87) International publication number:
**WO 2004/106392 (09.12.2004 Gazette 2004/50)**

(54) **POROUS FILMS**

PORÖSE FILME

FILMS POREUX

(84) Designated Contracting States:
**AT BE BG CH CY CZ DE DK EE ES FI FR GB GR HU IE IT LI LU MC NL PL PT RO SE SI SK TR**

(30) Priority: **29.05.2003 US 474219 P**

(43) Date of publication of application:
**15.03.2006 Bulletin 2006/11**

(73) Proprietor: **DOW GLOBAL TECHNOLOGIES INC.**
**Midland, Michigan 48674 (US)**

(72) Inventors:
• **DEKUNDER, Staci, A.**
**Pearland, TX 77584 (US)**
• **RATTA, Varun**
**Pearland, TX 77584 (US)**
• **SEHANOBISH, Kalyan**
**Rochester Hills, MI 48309 (US)**
• **CRIM, James, B.**
**Lake Jackson, TX 77566 (US)**

(74) Representative: **Hayes, Adrian Chetwynd**
**Boult Wade Tennant,**
**Verulam Gardens**
**70 Gray's Inn Road**
**London WC1X 8BT (GB)**

(56) References cited:
| | |
|---|---|
| **EP-A- 0 060 599** | **EP-A- 0 368 632** |
| **EP-A- 0 391 661** | **EP-A- 0 500 931** |
| **DE-A- 3 832 673** | **GB-A- 1 248 731** |
| **US-A- 3 085 608** | **US-A- 4 205 957** |
| **US-A- 4 332 845** | **US-A- 4 672 684** |
| **US-A- 4 743 123** | **US-A- 5 888 597** |

• **PATENT ABSTRACTS OF JAPAN vol. 0150, no. 31 (C-0798), 24 January 1991 (1991-01-24) & JP 2 268806 A (NIPPON SODA CO LTD), 2 November 1990 (1990-11-02)**

**Description**

The present invention relates to porous or breathable films and processes for making such films.

Films are often desired for use in applications that require resistance to penetration by products, such as cement. Such applications include, for example, dry filled materials such as cement and aggregate. In such applications it is often desirable that the films be vapor permeable. Films which are both liquid impermeable and vapor permeable are called breathable films.

Breathable films are conventionally made by modifying a polymer so that a film prepared from the modified polymer is vapor permeable. The modification is accomplished by mixing the polymer with a substantial quantity of a high density inorganic filler such as calcium carbonate. Next the polymer-filler mixture is extruded to form a film. The film is heated and stretched to form a breathable film.

Unfortunately, when using such fillers to produce breathable films, die buildup occurs during the extrusion. The die buildup slows processing and results in part from stearic acid coated on the surface of the calcium carbonate filler. In order to reduce the die build-up, some manufacturers have sought to reduce the stearic acid associated with the filler. Unfortunately, this often results in a poorly processable film and the manufacturers are usually forced to add calcium stearate which adds to processing time and expense.

In addition, the prior art breathable films are expensive due to the compounding cost associated with the addition of the high density inorganic filler, the increased scrap rate if the film forms holes around agglomerated filler and often the mechanical integrity of the breathable film is insufficient for some applications.

Other attempts to control permeability of films include those described in U.S.-A-Patents 4,743,123 (Legters et al.); 4,310,118 (Kisida et al.); 4,672,684 (Barnes et al.); and 4,834,554 (Stetler, Jr. et al.).

It would be desirable to discover a new breathable film which does not require a high density filler, is not costly, and has good mechanical integrity. It would be further desirable to discover a process for making such films which had reduced die buildup. Advantageously, a new breathable film has been discovered which does not require a high density filler, is cost-effective, and has good mechanical integrity.

In one aspect, a thermoplastic bag has been discovered, said bag capable of containing fine powders. The present invention provides a packaging bag for powdery or granular material made of a film or sheet comprising at least one thermoplastic polymer, wherein the film or sheet is perforated and has an air permeability of at least 20 m$^3$/hour wherein the thermoplastic polymer comprises a homopolymer or interpolymer of polyethylene having a melt index of from 0.2 to 5 grams/10 minutes, a density of from 0.9 to 0.97 grams/cubic centimetre, and a molecular weight distribution, Mw/Mn, from 1.5 to 5. A bag of the present invention can comprise a powder having an average particle size as low as 100 micrometers, preferably 10 micrometers, more preferably 5 micrometers, even more preferably 2 micrometers and especially as low as 1 micrometer, and can be as high as 5.08cm (2 inches), preferably 3.81cm (1.5 inches), more preferably 2.54cm (1 inch), even more preferably as high as 1.27cm (0.5 inches), most preferably as high as 500 micrometers or even 200 micrometers. Most preferably, the particle size ranges from I micrometer to 100 micrometers. The particle size can be any shape, such as spherical, or it can be irregularly shaped and non-uniform.

In another embodiment, the invention is a film structure having at least 2 plies, wherein each ply has a hole size gradient differing from the other ply, preferably each ply has a hole spacing gradient differing from the other ply and/or a hole size gradient offsetting from that of the other ply. The film structure can also comprise at least one other film ply comprising woven (including braided) film ribbons made from a polyolefin (for example, RAFFIA polypropylene) such as is taught in EP 0776762, EP 1277573, US 6,045,923, EP 0513121, US 5,578,370, EP 0337662, EP 0503048 and EP 0391661.

The thermoplastic polymer can be a functionalized polymer, such as a maleic anhydride grafted polyethylene.

In yet another embodiment, a film structure comprising at least one layer comprising at least one foamed thermoplastic having either open or closed, or a combination of both, cell foam structure having a thickness from 25.4 $\mu$m (1 mil) to 762 $\mu$m (30 mils). Foamed film can be made on a conventional blown film line, utilizing conventional blowing agents such as diazo compounds.

The film structure can comprise at least one other layer (for example, to include printing capability).

In another embodiment, the invention is a film structure comprising at least one film ply comprising woven film ribbons made from a polyolefin (for example, RAFFIA polypropylene) and at least one other film structure comprising a cavitated film structure. Coextruded film structures are also within the purview of the invention.

The porous or breathable film comprises a thermoplastic polymer, preferably at least one polyolefin. The film preferably has an air permeability of at least 20m$^3$/hour and preferably a Gurley permeability number (ISO test method 5636/5 titled "Paper and Board - Determination of Air Permeance (medium range) - Part 5: Gurley Method of less than 35 seconds. The film can have a perforation density of at least 54250 $\mu$m$^2$/cm$^2$ (350,000 microns$^2$/inch$^2$) preferably at least 77500 $\mu$m$^2$/cm$^2$ (500,000 micron$^2$/inch$^2$).

The film can have an average number density of holes from 0.93 to 7.75 holes/cm$^2$ (6 to 50 holes/inch$^2$) and, preferably, an average individual hole area of from 10,000 $\mu$m$^2$ (microns$^2$) to 70,000 $\mu$m$^2$ (microns$^2$).

Typically, the film has a minimum hole size of 100 $\mu$m2 (microns2).

The invention also comprises a packaging bag for powdery or granular material made of a film or sheet comprising a perforated film comprising at least one thermoplastic polymer and characterized as having at least one of the following properties a) an air permeability of at least 20m3/hour, or b) a Gurley permeability number (ASTM test) of less than 35 seconds, wherein the thermoplastic polymer comprises a homopolymer or interpolymer of polyethylene having a melt index of from 0.2 to 5 grams/10 minutes, a density of from 0.9 to 0.97 grams/cubic centimeter, and a molecular weight distribution, Mw/Mn from 1.5 to 5.

The thermoplastic polymer comprises polyethylene.

The polyethylene has a melt index of from 0.2 to 5 grams/10 minutes, a density of from 0.9 to 0.97 grams/cubic centimeter and a molecular weight distribution, Mw/Mn, from 1.5 to 5.

The thermoplastic polymer is selected from the group consisting of homopolymers and interpolymers of polyethylene, and blends thereof.

The bag comprising the films of the invention generally have a thickness of from 25.4 $\mu$m (1 mil) to 508 $\mu$m (20 mils), preferably from 25.4 $\mu$m (1 mil) to 254 $\mu$m (10 mils) more preferably from 50.8 to 152.4 $\mu$m (2 to 6 mils).

The bag typically contains a weight of from 10kg to 100 kg, preferably from 25kg to 50 kg.

Advantageously, a new process for forming a breathable film has also been discovered. The process is advantageous because, for example, directly making film from a thermoplastic polymer, followed by careful and selected perforation, is more readily achieved compared to the calcium carbonate with potentially reduced scrap rates. The process comprises: (a) selecting a thermoplastic polymer suitable for making film wherein the thermoplastic polymer comprises a homopolymer or interpolymer of polyethylene having a melt index of from 0.2 to 5 grams/10 minutes, a density of from 0,9 to 0.97 grams/cubic centimetre, and a molecular weight distribution, Mw/Mn, from 1.5 to 5; (b) forming a blown cast film from the thermoplastic polymer wherein the film is formed by employing a melt temperature of from 175 to 260°C, and a BUR of from 2.5 to 3.7; (c) perforating said film under conditions sufficient to form said film, wherein said film has a Gurley permeability number (ASTM test) of less than 35 seconds.

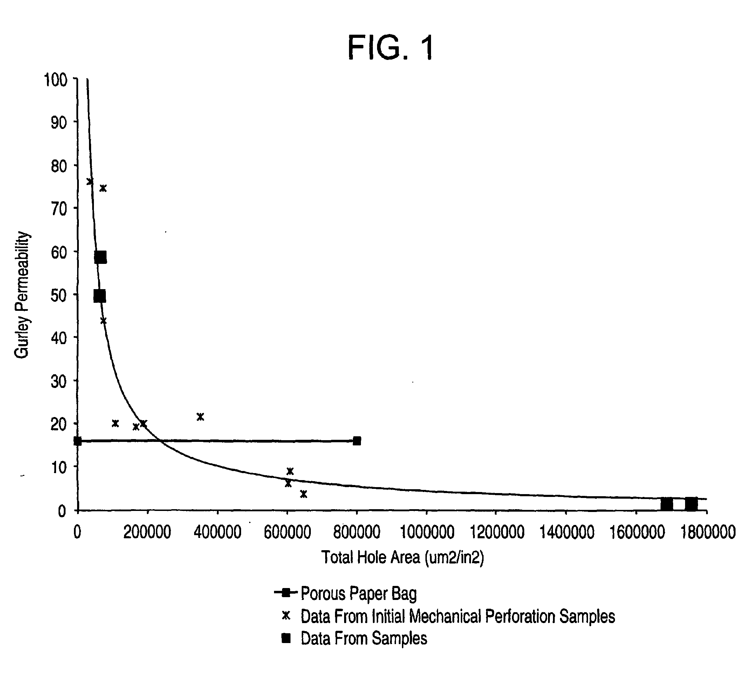

Figure 1. Plot of Gurley Permeability of various films versus total hole area ((micrometers2/cm2)(micrometers2/inches2)) Films include the novel films of the invention as well as porous paper bags.

Unless indicated otherwise, the following testing procedures are to be employed.

Density is measured in accordance with ASTM D-792. The samples are annealed at ambient conditions for 24 hours before the measurement is taken.

Elongation (percent) is measured in accordance with ASTM D882.

Melt index ($I_2$), (measured in the case of the polyolefin, for example, homogeneous linear or substantially linear ethylene polymers or low density ethylene polymer) is measured in accordance with ASTM D-1238, condition 190 C/2.16 kg (formerly known as "Condition (E)").

Melt index ($I_{10}$), (measured in the case of the polyolefin, for example, homogeneous linear or substantially linear ethylene polymers or low density ethylene polymer) is measured in accordance with ASTM D-1238, condition 190 C/10 kg.

Melt flow rate (such as that reported for polypropylene) is measured in accordance with ASTM D-1238, condition 230 C/2.16 kg (formerly known as "Condition (L)"). Molecular weight is determined using gel permeation chromatography (GPC) on a Waters 150°C high temperature chromatographic unit equipped with three mixed porosity columns (Polymer Laboratories $10^3$, $10^4$, $10^5$, and $10^6$), operating at a system temperature of 140° C. The solvent is 1,2,4-trichlorobenzene, from which 0.3 percent by weight solutions of the samples are prepared for injection. The flow rate is 1.0 mL/min. and the injection size is 100 microliters.

The molecular weight determination is deduced by using narrow molecular weight distribution polystyrene standards (from Polymer Laboratories) in conjunction with their elution volumes. The equivalent polyethylene molecular weights are determined by using appropriate Mark-Houwink coefficients for polyethylene and polystyrene (as described by Williams and Word in Journal of Polymer Science, Polymer Letters, Vol. 6, (621) 1968,) to derive the following equation:

$$\text{Mpolyethylene} = a * (\text{Mpolystyrene})b.$$

In this equation, a = 0.4316 and b = 1.0. Weight average molecular weight, Mw, is calculated in the usual manner according to the following formula: $M_w = \Sigma w_i{}^* M_i$, where $w_i$ and $M_i$ are the weight fraction and molecular weight, respectively, of the ith fraction eluting from the GPC column.

The term "composition" as used herein includes a mixture of the materials which comprise the composition, as well as, products formed by the reaction or the decomposition of the materials which comprise the composition. The term "derived from" means made or mixed from the specified materials, but not necessarily composed of a simple mixture of those materials. Compositions "derived from" specified materials may be simple mixtures of the original materials, and may also include the reaction products of those materials, or may even be wholly composed of reaction or decomposition products of the original materials.

The term "interpolymer" means a polymer of two or more comonomers, for example a copolymer, terpolymer, etc.

The amount of the thermoplastic polymer in the film composition will vary depending on the properties desired, for example, film strength properties, the other components, and the type or types of polymer employed. Generally, the amount of polyolefin in the film is at least 40, preferably at least 50, more preferably at least 60 percent by weight of the total composition, up to 100 percent.

The thermoplastic polymer generally comprises one or more ethylene interpolymers as the major component. The film may comprise minor components such as polypropylenes including homopolymers, random, and impact polypropylene copolymers. Other minor components include linear low density polyethylene, low density polyethylene, and high density polyethylene.

Interpolymers which are useful in the present invention as the majority of the thermoplastic polymer include linear ethylene polymers and substantially linear ethylene polymers. The amount of such polymers, if any, in the composition will vary depending on the properties desired, the other components, and the type of linear or substantially linear polyethylene.

The linear or substantially linear ethylene polymers which may be employed herein are characterized by a density of at least 0.87, preferably at least 0.89 g/cm$^3$. Correspondingly, the density is usually less than 0.97, preferably less than 0.94 g/cm$^3$.

Another characteristic of the linear or substantially linear ethylene polymers which may be employed herein is, for example, a molecular weight distribution, $M_w/M_n$ of less than or equal to 5, preferably less than or equal to 4, and more preferably from 1.5 to 4.

Yet another characteristic of the linear or substantially linear ethylene polymer which may be employed herein is a melt index, $I_2$, as measured in accordance with ASTM D-1235, Condition 190° C/2.16 kg of from 0.1 to 30.0 dg/min. The linear or substantially linear ethylene polymer which may be employed herein may be a homopolymer or copolymer of ethylene with one or more monomers. Preferred monomers or copolymers of ethylene with one or more monomers. Preferred monomers include $C_3$-$C_8$ alpha-olefins such as 1-butene, 1-pentene, 4-methyl-1-pentene, 1-hexene, 1-heptene, and 1-octene.

The linear ethylene polymer may be an ethylene polymer prepared using a transition metal catalyst, for example, a single site catalyst or a Ziegler-Natta catalyst. The term "linear polymer" comprises both homogeneous linear polymers and heterogeneous linear polymers. By the term "homogenous", it is meant that any comonomer is randomly distributed within a given interpolymer molecule and substantially all of the interpolymer molecules have the same ethylene/comonomer ratio within that interpolymer. However, unlike heterogeneous polymers, when a homogeneous polymer has a melting peak greater than 115°C (such as is the case of polymers having a density greater than 0.940 g/cm$^3$), such polymers do not additionally have a distinct lower temperature melting peak.

Further, the homogeneous linear or substantially linear ethylene polymers will lack a measurable high density fraction, (that is essentially linear or homopolymer fraction as measured by Temperature Rising Elution Fractionation which is described in U.S.-A-Patent No. 5,089,321, and which is incorporated in its entirety into and made a part of this application), for example they will not contain any polymer fraction that has a degree of branching less than or equal to 2 methyl/1000 carbons.

The homogeneous linear or substantially linear ethylene polymers are characterized as having a narrow molecular weight distribution ($M_w/M_n$). For the linear and substantially linear ethylene polymers, the molecular weight distribution, $M_w/M_n$, is for example, less than or equal to 5, preferably less than or equal to 4, and more preferably from 1.5 to 4.

The distribution of comonomer branches for the homogeneous linear and substantially linear ethylene polymers is characterized by its SCBDI (Short Chain Branch Distribution Index) or CDBI (Composition Distribution Branch Index) and is defined as the weight percent of the polymer molecules having a comonomer content within 50 percent of the median total molar comonomer content. The CDBI of a polymer is readily calculated from data obtained from techniques known in the art, such as, for example, temperature rising elution fractionation (abbreviated herein as "TREF") as described, for example, by Wild et al., Journal of Polymer Science, Poly. Phys. Ed., Vol. 20, p. 441 (1982), or in U.S.-A-Patent Nos. 4,798,081 and 5,008,204. The SCBDI or CDBI for the substantially linear polymers useful in the compositions of the present invention is preferably greater than 50 percent, especially greater than 70 percent, more preferably greater than 90 percent.

Homogeneous linear ethylene/α-olefin interpolymers may be prepared using polymerization processes (for example, as described by Elston in U.S.-A-Patent No. 3,645,992) which provide a homogeneous short chain branching distribution. In his polymerization process, Elston uses soluble vanadium catalyst systems to make such polymers. However, others such as Mitsui Petrochemical Company and Exxon Chemical Company have used so-called single site catalyst systems to make polymers having a homogeneous linear structure. Homogeneous linear ethylene/α-olefin interpolymers are currently commercially available from Mitsui Petrochemical Company under the tradename "Tafmer".

In contrast to homogeneous linear ethylene polymers (which have fewer than 0.01 long chain branches per 1000 carbons), substantially linear ethylene polymers are homogeneous polymers having long chain branching. In particular, as used herein, "substantially linear" means that the polymer backbone is substituted with 0.01 long-chain branches/1000 carbons to 3 long-chain branches/1000 carbons, preferably from 0.01 long-chain branches/1000 carbons to 1 long-chain branch/ 1000 carbons, and more preferably from 0.05 long-chain branches/1000 carbons to 1 long-chain branch/1000 carbons. Long chain branching is defined in U.S.-A-Patent No. 5,272,236 and U.S.-A-Patent 5,278,272.

Long chain branching (LCB) is defined herein as a chain length of at least one (1) carbon less than the number of carbons in the comonomer, whereas short chain branching (SCB) is defined herein as a chain length of the same number of carbons in the residue of the comonomer after it is incorporated into the polymer molecule backbone. For example, an ethylene/1-octene substantially linear polymer has backbones with long chain branches of at least seven (7) carbons in length, but it also has short chain branches of only six (6) carbons in length.

Long chain branching can be distinguished from short chain branching by using $^{13}$C nuclear magnetic resonance (NMR) spectroscopy and to a limited extent, for example, for ethylene homopolymer it can be quantified using the method of Randall (Rev. Macromol. Chem. Phys., C29 (2&3), p. 285-297). However, as a practical matter, current $^{13}$C nuclear magnetic resonance spectroscopy cannot determine the length of a long chain branch in excess of six (6) carbon atoms and as such, this analytical technique cannot distinguish between a seven (7) carbon branch and a seventy (70) carbon branch. The long chain branch can be as long as the same length as the length of the polymer backbone.

The homogeneous and substantially linear ethylene polymers used in the composition of this invention are known, and they and their method of preparation are fully described in, for example, U.S.-A-Patent Nos. 5,272,236, 5,278,272, and 5,703,187.

Methods for determining the amount of long chain blanching present, both qualitatively and quantitatively, are known in the art. For qualitative methods for determination, see, for example, U.S.-A-Patent Nos. 5,272,236 and 5,278,272, which disclose the use of an apparent shear stress vs. apparent shear rate plot to identify melt fracture phenomena.

For quantitative methods for determining the presence of long chain branching, see, for example, U.S.-A-Patent Nos. 5,272,236 and 5,278,272; Randall (Rev. MacromoL Chem. Phys., C29 (2&3), p. 285-297), which discusses the measurement af long chain branching using 13C nuclear magnetic resonance spectroscopy, Zimm, G.H. and Stockmayer, W.H., J. Chem. Phys., 17,1301 (1949); and Rudin, A., Modern Methods of Polymer Characterization, John Wiley & Sons, New York (1991) pp. 103-112, which discuss the use of gel permeation chromatography coupled with a low angle laser light scattering detector (GPC-LALLS) and gel permeation chromatography coupled with a differential viscometer detector (GPC-DV).

A. Willem deGroot and P. Steve Chum, both of ne Dow Chemical Company, at the October 4,1994 conference of the Federation of Analytical Chemistry and Spectroscopy Society (FACSS) in St. Louis, Missouri, presented data demonstrating that GPC-DV is indeed a useful technique for quantifying the presence of long chain branches in substantially linear ethylene polymers. In particular, deGroot and Chum found that the level of long chain branches in substantially linear ethylene homopolymer samples measured using the Zimm-Stockmayer equation correlated well with the level of long chain branches measured using $^{13}$C NMR.

Further, deGroot and Chum found that the presence of octane does not change the hydrodynamic volume of the polyethylene samples in solution and, as such, one can account for the molecular weight increase attributable to octane short chain branches by knowing the mole percent octane in the sample. By deconvoluting the contribution to molecular weight increase attributable to 1-octene short chain branches, deGroot and Chum showed that GPC-DV may be used to quantify the level of long chain branches in substantially linear ethylene/octane copolymers.

DeGroot and Chum also showed that a plot of $Log(I_2$, melt index) as a function of Log(GPC Weight Average Molecular Weight) as determined by GPC-DV illustrates that the long chain branching aspects (but not the extent of long branching) of substantially linear ethylene polymers are comparable to that of high pressure, highly branched low density polyethylene (LDPE) and are clearly distinct from ethylene polymers produced using Ziegler-type catalysts such as titanium complexes and ordinary homogeneous catalysts such as hafnium and vanadium complexes.

The "theological processing index" (PI) is the apparent viscosity (in kpoise) of a polymer measured by a gas extrusion theometer(GER). The gas extrusion rheometer is described by M. Shida, R.N. Shroff and L.V. Cancio in Polymer Engineering Science, Vol. 17, No. 11, p. 770 (1977), and in "Rheometers for Molten Plastics" by John Dealy, published by Van Nostrand Reinhold Co. (1982) on pp. 97-99, both publications of which are incorporated by reference herein in their enthety. GER experimems are performed at a temperature of 190°C, at nitrogen pressures between 1.75 to 38.5 MPa gauge (250 to 5500 psig) using a 7.54 cm diameter, 20:1 L/D die with an entrance angle of 180°. For the substantially linear ethylene polymers useful herein, the PI is the apparent viscosity (in kpoise) of a material measured by CER at an apparent shear stress of $2.15 \times 10^6$ dyne/cm$^2$. The substantially linear ethylene polymers useful herein preferably have a PI in the range of 0.01 kpoise to 50 kpoise, preferably 15 kpoise or less. The substantially linear ethylene polymers useful herein have a PI less than or equal to 70 percent of the PI of a comparative linear ethylene polymer (either a Ziegler polymerized polymer or a linear uniformly branched polymer as described by Elston in U.S.-A-Patent No. 3,645,992) at the same $I_2$ and $M_w/M_n$.

Substantially linear ethylene polymers will further be characterized as having a resistance to melt fracture. An apparent shear stress versus apparent shear rate plot is used to identify the melt fracture phenomena. According to Ramamurthy in the Journal of Rheology, 30(2), 337-357,1986, above a certain critical flow rate, the observed extrudate irregularities may be broadly classified into two main types: surface melt fracture and gross melt fracture.

Surface melt fracture occurs under apparently steady flow conditions and ranges in detail from loss of specular film gloss to the more severe form of "sharkskin." The onset of surface melt fracture (OSMF) is characterized at the beginning of losing extrudate gloss at which the surface roughness of the extrudate can only be detected by 40x magnification. The critical shear rate at the onset of surface melt fracture for the substantially linear ethylene interpolymers and homopolymers is at least 50 percent greater than the critical shear rate at the onset of surface melt fracture of a comparative linear ethylene polymer (either a Ziegler polymerized polymer or a linear uniformly branched polymer as described by Elston in USA Patent No. 3,645,992) having the same $I_2$ and $M_w/M_n$.

Gross melt fracture occurs at unsteady extrusion flow conditions and ranges in detail from regular (alternating rough and smooth, helical, *etc.*) to random distortions. For commercial acceptability, (for example, in blown films and bags therefrom), surface defects should be minimal, if not absent, for good film quality and properties. The critical shear stress at the onset of gross melt fracture for the substantially linear ethylene polymers used in making the film structures of the present invention is greater than $4 \times 10^6$ dynes/cm$^2$. The critical shear rate at the onset of surface melt fracture (OSMF) and the onset of gross melt fracture (OGMF) will be used herein based on the changes of surface roughness and configurations of the extrudates extruded by a GER.

The substantially linear ethylene polymers will be characterized as having an $I_{10}/I_2$ (ASTM D-1238), which is greater than or equal to 5.63, and is preferably from 6.5 to 15, more preferably from 7 to 10. The molecular weight distribution ($M_w/M_n$), measured by gel permeation chromatography (GPC), is defined by the equation:

$$M_w/M_n \leq (I_{10}/I_2) - 4.63,$$

and is preferably between 1.5 and 2.5. For the substantially linear ethylene polymers, the $I_{10}/I_2$ ratio indicates the degree of long-chain branching, that is the larger the $I_{10}/I_2$ ratio, the more long-chain branching in the polymer.

Substantially linear ethylene polymers have a highly unexpected flow property, where the $I_{10}/I_2$ value of the polymer is essentially independent of the polydispersity index (that is, $M_w/M_n$) of the polymer. This is contrasted with conventional linear homogeneously branched and linear heterogeneously branched polyethylene resins having rheological properties such that to increase the $I_{10}/I_2$ value the polydispersity index must also be increased.

The homogeneous linear or substantially linear ethylene polymer may be suitably prepared using a constrained geometry metal complex, such as are disclosed in U.S. Application Serial No. 545,403, filed July 3, 1990 (EP-A-416,815); U.S. Application Serial No. 702,475, filed May 20, 1991 (EP-A-514,828); as well as U.S.-A-5,470,993, 5,374,696, 5,231,106, 5,055,438, 5,057,475, 5,096,867, 5,064,802, and 5,132,380. In U.S. Application Serial No. 720,041, filed June 24, 1991, (EP-A-514,828) certain borane derivatives of the foregoing constrained geometry catalysts are disclosed and a method for their preparation taught and claimed. In U.S.-A-5,453,410 combinations of cationic constrained geometry catalysts with an alumoxane were disclosed as suitable olefin polymerization catalysts.

The heterogeneous linear ethylene polymers are homopolymers of ethylene or copolymers of ethylene and one or more $C_3$ to $C_8$ alpha olefins. Both the molecular weight distribution and the short chain branching distribution, arising from alpha olefin copolymerization, are relatively broad compared to homogeneous linear ethylene polymers. Heterogeneous linear ethylene polymers can be made in a solution, slurry, or gas phase process using a Ziegler-Natta catalyst, and are well known to those skilled in the art. For example, see U.S.-A-Patent No. 4,339,507.

Mixtures of heterogeneous and homogeneous ethylene polymers ("composite polyethylene") can also be used for the films of the present invention, such as those disclosed by Kolthammer et al. (U.S.-A-Patents 5,844,045; 5,869,575; and 6,448,341).

## Process for Forming the Breathable Films

The breathable films of the present invention may be formed in the following manner. Typically, it is suitable to extrusion blend the components and any additional additives such as slip, anti-block, and polymer processing aids. The extrusion blending should be carried out in a manner such that an adequate degree of dispersion is achieved. The parameters of extrusion blending will necessarily vary depending upon the components. However, typically the total polymer deformation, that is, mixing degree, is important and is controlled by, for example, the screw-design and the melt temperature.

After extrusion blending, a film structure is formed. Film structures may be made by conventional fabrication techniques, for example simple bubble extrusion, biaxial orientation processes (such as tenter frames or double bubble processes), simple cast/sheet extrusion, coextrusion, lamination, *etc.* Conventional simple bubble extrusion processes (also known as hot blown film processes) are described, for example, in The Encyclopedia of Chemical Technology, Kirk-Othmer, Third Edition, John Wiley & Sons, New York, 1981, Vol. 16, pp. 416-417 and Vol. 18, pp. 191-192. Biaxial orientation film manufacturing processes such as described in the "double bubble" process of U.S.-A-Patent No. 3,456,044 (Pahlke), and the processes described in U.S.-A-Patent No. 4,352,849 (Mueller), U.S.-A-Patent Nos. 4,820,557 and 4,837,084 (both to Warren), U.S.-A-Patent No. 4,865,902 (Golike et al.), U.S.-A-Patent No. 4,927,708 (Herran et al.), U.S.-A-Patent No. 4.952,451 (Mueller), and U.S.-A-Patent Nos. 4,963,419 and 5,059,481 (both to Lustig et al.), can also be used to make the novel film structures of this invention.

The melt temperature during the film forming varies depending upon the components of the film. Generally the melt temperature is from 175 to 260, preferably from 185 to 240, more preferably between 195 to 220 degrees Celsius.

As with all bubble extrusion, the bubble should remain stable. To maintain bubble stability, the blower capacity may be adjusted by adjusting air speed and frostline height (FLH). The blow-up ratio (BUR) and draw-down ratio (DDR) may also be adjusted during the film formation depending upon the components and the melt temperature. The BUR is from 2.5 to 3.7 preferably from 2 to 3.7, and more preferably from 2 to 3.5. Correspondingly, the DDR should be from 5 to 25 and preferably from 15 to 20. Thus, it may be necessary to adjust parameters of the extruder such as die diameter, and die gap so that the morphology may be adequately controlled during the film formation.

Manufacturing techniques for making structures of the invention include vertical form-fill-sealing techniques, such as that described in Packaging Machinery Operation, Chapter 8: Form-Fill-Sealing by C. Glenn Davis (Packaging Machinery Manufacturers Institute, 2000 K Street, N.W., Washington, D.C. 20006); The Wiley Encyclopedia of Packaging Technology, Marilyn Bakker, Editor-in-chief, pp. 364-369 (John Wiley & Sons); U.S. 5,288,531 (Falla et aL), U.S. 5,721,025 (Falla et aL), U.S. 5.360,648 (Falla et al.) and U.S. 6,117,465 (Falla et aL); other film manufacturing techniques such as that discussed in Plastic Films, Technology and Packaging Applications (Technomic Publishing Co., Inc.(1992)) by Kenton R. Osborn and Wilmer A Jenkens, pp. 39-105.

Other film manufacturing techniques are disclosed in U.S. 6,723,398 (Chum et al.). Post processing techniques, such as radiation treatment and corona treatment, especially for printing applications, can also be accomplished with the materials of me invention. Film made from the invention can also be silane cured, or the polymers used to make the inventive article can be grafted post manufacture (such as maleic anhydride grafted polymers, including techniques disclosed in U.S. 4,927,888 (Strait et al.), U.S. 4,950,541 (Tabor et al.), U.S. 4,762,890 (Strait et al.), U.S. 5,346,963 (Hughes et al.), U.S. 4,684,576 (Tabor et al.),).

After the film has been formed, it can be stretched. The stretching can be accomplished in any manner.

The breathable films of the aforementioned processes may be made to any thickness depending upon the application. Typically the films have a total thickness of from 25.4 $\mu$m to 508 $\mu$m (1 to 20), preferably from 25.4 $\mu$m to 254 $\mu$m (1 to 10), more preferably from 50.8 to 152.4 $\mu$m (2 to 6 mils). The permeability may also be adjusted depending upon the application. The breathable films may be employed in packaging powders, dry goods.

The films and processes of this invention and their use are more fully described by the following examples. Unless indicated to the contrary, all parts and percentages are by weight.

**Examples**

The polymers of the table entitled "Polymers" were utilized in preparing the compositions and films of Example 1.

**Polymers**

| Polymer Type | Polymer designation | Density (g/cm³) | Melt Index or Melt Flow Rate (g/10 min) |
|---|---|---|---|
| Composite PE* | POLYETHYLENE | 0.92 | 1 |
| PP | POLYPROPYLENE | 0.917 | 0.4 |

Composite PE = 36.4 percent homogeneous PE (ethylene/1-octene copolymer) having melt index of 0.19 g/10 minutes, density of 0.902 g/cc and 63.6 percent heterogeneous PE (ethylene/1-octene copolymer) having melt index of 1.6 g/10 minutes, density of 0.931 g/cc; the composite PE was stabilized with calcium stearate (1250 ppm), a phosphite stabilizer such as 1000 ppm Irgafos* 168, a hindered phenolic stabilizer such as 200 ppm Irganox* 1010 and/or 250 ppm 1076, and was made *in-situ* in series reactors according to the teachings of USP 5,844,045, USP 5,869,575, and/or USP 6,448,341 (Irgafos* and Irganox* were both trademarks of Ciba-Geigy Corp.)

PP = diphenyl oxide 4,4' bis-sulfonyl azide (150 ppm) modified impact copolymer ethylene (8-10 percent by weight)/polypropylene containing 500 ppm calcium stearate, 600 ppm Irgafos 168,1000 ppm Irganox 1010, and has a premodified melt flow rate of 0.8 g/10 minutes (condition 230C/2.16 kg) and a final (post-modified) MFR of 0.4 g/10 minutes (also condition 230C/2.16 kg) prepared using the process of any of the following U.S. Patents: USP 6,528,136;

USP 6,143,829; USP 6,359,073 and of WO 99/10424. NM = not measured

**Example 1**

A dry blend comprising 62 percent by weight POLYETHYLENE, 34 percent by weight POLYPROPYLENE and 4 percent by Weight white masterbatch ($TiO_2$) was dry-blended. The dry blend was fed directly into the extruder to make blown film.

The temperature profile in the extruder was set to yield a melt temperature of 254.4 °C (490°F). The pellets were then extruded on a Gloucester blown film line with a die diameter of 15.24 cm (6 inches), single flight, double mix screw, an extruder diameter of 6.35 cm (2.5 inches), and L/D of 30:1. The frostline height (FLH), blow-up ratio (BUR) and melt temperature were kept relatively constant at 76.2 cm (30 inches), die gap of 1016 $\mu$m (40 mils), BUR of 2.1, melt temperature of 254.4°C (490°F). A monolayer film having a thickness of 228.6 $\mu$m (9 mils) resulted. Output rate was 73.9 kg/hr (163 pounds per hour).

The resulting film was perforated by Perforating Industries. They used a semi-continuous process with two plates, one with pins and one with matching holes. The film was incremented and the plates closed to make boles. Then the plates open and the film was incremented (that was, advanced forward). Other processes such as a pinned roller with a pressure roller using a roll-to-roll continuous process were also contemplated for perforation. Laser perforation could also be employed. Perforating Industries used a pattern that had 6.5 holes/$cm^2$ (42 holes/$in^2$). Each hole was fairly random in shape (although circular was preferred). An elliptical shape was used to approximately calculate the area of the hole by measuring the 'long' and 'short' dimension. The average area per hole was 40,000 - 41,000 micrometers$^2$. So, the area of holes per area of film was 261486 to 2721960 micrometers$^2$/$cm^2$ (1,687,000 -1,756,1000 micrometers$^2$/$in^2$).

| Sample Description | Example 1 perforated film |
| --- | --- |
| Thickness ($\mu$m) ((mils)) | 228.6 $\mu$m (9) |
| Elmendorf Tear (B) CD (g) | 1400 |
| Elmendorf Tear (B) MD (g) | 1011 |
| Dart B (g) | 214 |
| Dart Modified (g) | 274 |
| 2 percent Secant Modulus CD (MPa) ((psi)) | 296.9 (42416.54) |
| 2 percent Secant Modulus MD (Mpa) ((psi)) | 320.3 (45763.3) |
| Ultimate Tensile CD (Mpa) ((psi)) | 11.9 (1695.7) |
| Ultimate Tensile MD (Mpa) ((psi)) | 11.7 (1673.98) |
| Yield Load CD (Kg) ((lb)) | 7.27 (16.02) |
| Yield Load MD (Kg) ((lb)) | 5.79 (12.76) |
| Yield Strength CD (MPa) ((psi)) | 11.2 (1606.54) |
| Yield Strength MD (MPa) ((psi))) | 10.1 (1446.02) |

Dart impact (type B) of the films was measured in accordance with ASTM D-1709-85; tensile strength, yield, toughness, and 2 percent secant modulus of the films was measured in accordance with ASTM D-882; Elmendorf tear (type B) was measured in accordance with ASTM D-1922

The perforated film was then sent to a converter for bag making. Dimensions of the bag were approximately 49.5 cm wide, 11 cm depth, and 59 cm long.

Gurley data on this film was 1.5-2.5 seconds. For paper the permeability was 14-16 seconds. A small sample of film was placed in a chamber with a given pressure. The measurement was the time required for a certain volume of air to permeate through the sample, as described by ISO test method 5636/5 titled "Paper and Board- Determination of Air Permeance (medium range) - Part 5: Gurley Method". Therefore, the lower the number the more permeable the film was (the faster the given volume can escape). Thus, the novel films were several times more permeable than paper.

The bags were also tested for permeability. The bags were placed on a nozzle and air was pumped into the bag to achieve a given pressure (50 millibar). Once equilibrium was reached, the flow through the bag was measured in terms of $m^3$/hr of air. A bag made from the novel film of the invention has a permeability of >100 $m^3$/hr, while the paper bag has 39-42 $m^3$/hr. In this case, the higher the number, the more permeable is the bag. Again, indicating that bags made from the novel films were more permeable than paper.

Another concept uses the same bag described above, but includes a sleeve to help in the event that this bag was too dirty, that was cement (as typical dry filler material) escapes from the hole with the air. The sleeve has a few larger holes to aflow the air to escape, but keep the cement in (or at least in between the plies).

A third aspect includes a non-woven patch. A bag of the same film as described above was used. This bag was perforated the same way as above, but it has lower overall permeability via fewer and smaller holes. There were 0.93 holes/cm$^2$ (6 holes/in$^2$) of to (10,650 micrometers$^2$/hole). The resulting total hole area was 9765 to 9920 micrometer$^2$/cm$^2$ (63,000 - 64,000 micrometer$^2$/in$^2$). The Gurley data for this sample was 50 - 60 seconds - this was about 3 times less permeable than paper.

**Claims**

1. A perforated film comprising at least one thermoplastic polymer and **characterized** as having at least one of the following properties a) an air permeability of at least 20 m$^3$/hour, or b) a Gurley permeability number (ASTM test) of less than 35 seconds, wherein the thermoplastic polymer comprises a homopolymer or interpolymer of polyethylene having a melt index of from 0.2 to 5 grams/10 minutes, a density of from 0.9 to 0.97 grams/cubic centimeter, and a molecular weight distribution, Mw/Mn, from 1.5 to 5.

2. The film of claim 1 wherein the film has both of the properties.

3. The film of claim 1 having a perforation density of at least 54250 $\mu$m$^2$/cm$^2$ (350,000 microns$^2$/inch$^2$).

4. The film of claim 1 having a perforation density of at least 77500 $\mu$m$^2$/cm$^2$ (500,000 microns$^2$/inch$^2$).

5. The film of claim 1 having an average number density of holes from 0.93 holes/cm$^2$ (6) to 7.75 holes/cm$^2$ (50 holes/inch$^2$).

6. The film of claim 1 having an average individual hole area of from 10,000 $\mu$m$^2$ (micronS$^2$) to 70,000 $\mu$m$^2$ (microns$^2$).

7. The film of claim 1 having a minimum hole size of about 100 $\mu$m (microns).

8. The film of claim 1, wherein the thermoplastic polymer further comprises homopolymers and interpolymers of polypropylene.

9. The film of claim 1, wherein the film is **characterized by** the absence of a wax compatibilizer.

10. The film of claim 1 wherein the film is **characterized by** the absence of an inorganic filler.

11. The film of claim 1, wherein the thermoplastic polymer is selected from the group consisting of linear ethylene polymer or substantially linear ethylene polymer
    **characterized by**:

    (1) a density of from 0.87 to 0.96 g/cm$^3$
    (2) a molecular weight distribution, Mw/Mn of less than or equal to about 5, and
    (3) a melt index, $I_2$, as measured in accordance with ASTM D-1238, Condition 190° C/2.16 kg of from 0.5 to 20.0 dg/minute, and polypropylene, or blends thereof.

12. The film of claim 11, wherein the linear or substantially linear ethylene polymer comprises a copolymer selected from the group consisting of ethylene and 1-octene, ethylene and 1-butene, ethylene and 1-hexene, ethylene and 1-pentene, ethylene and 1-heptene, ethylene and 4 methyl-1-pentena and mixtures thereof.

13. The film of claim 1 further comprising GPPS, HIPS, ABS, SAN, nylon, styrene block copolymers, or a mixture thereof.

14. A packaging bag for powdery or granular material made of a film or sheet comprising at least one thermoplastic polymer, wherein the film or sheet is perforated and has an air permeability of at least 20 m$^3$/hour wherein the thermoplastic polymer comprises a homopolymer or interpolymer of polyethylene having a melt index of from 0.2 to 5 grams/10 minutes, a density of from 0.9 to 0.97 grams/cubic centimeter, and a molecular weight distribution, Mw/Mn, from 1.5 to 5.

**15.** The bag of claim 14 having a thickness from 25.4 $\mu$m (1 mil) to 508 $\mu$m (20 mils).

**16.** The bag of claim 14 having a thickness from 50.8 to 152.4 $\mu$m (2 to 6 mils).

**17.** The bag of claim 14 containing a weight of from 10 kg to 100 kg.

**18.** A process for forming a breathable film according to claims 1 to 13 comprising:

(a) selecting a thermoplastic polymer suitable for making film wherein the thermoplastic polymer comprises a homopolymer or interpolymer of polyethylene having a melt index of from 0.2 to 5 grams/10 minutes, a density of from 0.9 to 0.97 grams/cubic centimeter, and a molecular weight distribution, $M_w/M_n$, from 1.5 to 5;
(b) forming a blown or cast film from the thermoplastic polymer wherein the film is formed by employing a melt temperature of from 175 to 260°C, and a BUR of from 2.5 to 3.7;
(c) perforating said film under conditions sufficient to form said breathable film, wherein said breathable film has a Gurley permeability number (ASTM test) of less than 35 seconds.

**19.** A film structure comprising the film according to claims 1 to 13, having at least 2 plies, wherein each ply has a hole size gradient differing from the other ply.

**20.** The film structure of claim 19, wherein each ply has a hole spacing gradient differing from the other ply.

**21.** The film structure of claim 20 wherein the hole size gradient is offsetting from that of the other ply.

**Patentansprüche**

**1.** Perforierte Folie, umfassend mindestens ein thermoplastisches Polymer und **dadurch gekennzeichnet, dass** sie mindestens eine der folgenden Eigenschaften a) eine Luftdurchlässigkeit von mindestens 20 m$^3$/h oder b) eine Gurley-Permeabilitätszahl (ASTM-Test) von weniger als 35 s aufweist, wobei das thermoplastische Polymer ein Homopolymer oder Interpolymer von Polyethylen mit einem Schmelzindex von 0,2 bis 5 g/10 min, einer Dichte von 0,9 bis 0,97 g/cm$^3$ und einer Molekulargewichtsverteilung, Mw/Mn, von 1,5 bis 5 umfasst.

**2.** Folie nach Anspruch 1, wobei die Folie beide Eigenschaften aufweist.

**3.** Folie nach Anspruch 1 mit einer Perforationsdichte von mindestens 54.250 $\mu$m$^2$/cm$^2$ (350.000 Mikron$^2$/Zoll$^2$).

**4.** Folie nach Anspruch 1 mit einer Perforationsdichte von mindestens 77.500 $\mu$m$^2$/cm$^2$ (500.000 Mikron$^2$/Zoll$^2$).

**5.** Folie nach Anspruch 1 mit einem Zahlenmittel der Dichte von Löchern von 0,93 Löchern/cm$^2$ (6) bis 7,75 Löchern/cm$^2$ (50 Löchern/Zoll$^2$).

**6.** Folie nach Anspruch 1 mit einer mittleren Einzellochfläche von 10.000 $\mu$m$^2$ (Mikron$^2$) bis 70.000 $\mu$m$^2$ (Mikron$^2$).

**7.** Folie nach Anspruch 1 mit einer Mindestlochgröße von etwa 100 $\mu$m (Mikron).

**8.** Folie nach Anspruch 1, wobei das thermoplastische Polymer ferner Homopolymere und Interpolymere von Polypropylen umfasst.

**9.** Folie nach Anspruch 1, wobei die Folie durch die Abwesenheit eines Wachs-Kompatibilisierungsmittels **gekennzeichnet** ist.

**10.** Folie nach Anspruch 1, wobei die Folie durch die Abwesenheit eines anorganischen Füllstoffs **gekennzeichnet** ist.

**11.** Folie nach Anspruch 1, wobei das thermoplastische Polymer ausgewählt ist aus der Gruppe bestehend aus linearem Ethylenpolymer oder im wesentlichen linearem Ethylenpolymer, **gekennzeichnet durch**:

(1) eine Dichte von 0,87 bis 0,96 g/cm$^3$
(2) eine Molekulargewichtsverteilung, Mw/Mn, von weniger als oder gleich etwa 5 und

(3) einen Schmelzindex $I_2$, gemessen gemäß ASTM D-1238, Bedingung 190°C/2,16 kg, von 0,5 bis 20,0 dg/min, und Polypropylen oder Mischungen davon.

12. Folie nach Anspruch 11, wobei das lineare oder im wesentlichen lineare Ethylenpolymer ein Copolymer ausgewählt aus der Gruppe bestehend aus Ethylen und 1-Octen, Ethylen und 1-Buten, Ethylen und 1-Hexen, Ethylen und 1-Penten, Ethylen und 1-Hepten, Ethylen und 4-Methylpenten-1 und Mischungen davon umfasst.

13. Folie nach Anspruch 1, ferner umfassend GPPS, HIPS, ABS, SAN, Nylon, Styrol-Blockcopolymere oder eine Mischung davon.

14. Verpackungsbeutel für pulvriges oder granuläres Material aus einer Feinfolie oder Folie, umfassend mindestens ein thermoplastisches Polymer, wobei die Feinfolie oder Folie perforiert ist und eine Luftdurchlässigkeit von mindestens 20 m$^3$/h aufweist, wobei das thermoplastische Polymer ein Homopolymer oder Interpolymer von Polyethylen mit einem Schmelzindex von 0,2 bis 5 g/10 min, einer Dichte von 0,9 bis 0,97 g/cm$^3$ und einer Molekulargewichtsverteilung, Mw/Mn, von 1,5 bis 5 umfasst.

15. Beutel nach Anspruch 14 mit einer Dicke von 25,4 $\mu$m (1 mil) bis 508 $\mu$m (20 mil).

16. Beutel nach Anspruch 14 mit einer Dicke von 50,8 bis 152,4 $\mu$m (2 bis 6 mil).

17. Beutel nach Anspruch 14, enthaltend ein Gewicht von 10 kg bis 100 kg.

18. Verfahren zur Bildung einer atmungsaktiven Folie gemäß den Ansprüchen 1 bis 13, umfassend:

   (a) das Auswählen eines thermoplastischen Polymers, das zur Herstellung einer Folie geeignet ist, wobei das thermoplastische Polymer ein Homopolymer oder Interpolymer von Polyethylen mit einem Schmelzindex von 0,2 bis 5 g/10 min, einer Dichte von 0,9 bis 0,97 g/cm$^3$ und einer Molekulargewichtsverteilung, Mw/Mn, von 1,5 bis 5 umfasst;
   (b) das Bilden einer Blas- oder Gießfolie aus dem thermoplastischen Polymer, wobei die Folie durch Anwenden einer Schmelztemperatur von 175 bis 260°C und einem BUR von 2,5 bis 3,7 gebildet wird;
   (c) das Perforieren der Folie unter Bedingungen, die ausreichen, um die atmungsaktive Folie zu bilden, wobei die atmungsaktive Folie eine Gurley-Permeabilitätszahl (ASTM-Test) von weniger als 35 s aufweist.

19. Folienstruktur, umfassend die Folie gemäß den Ansprüchen 1 bis 13 mit mindestens 2 Schichten, wobei jede Schicht einen von der anderen Schicht verschiedenen Lochgrößengradienten aufweist.

20. Folienstruktur nach Anspruch 19, wobei jede Schicht einen von der anderen Schicht verschiedenen Lochabstandsgradienten aufweist.

21. Folienstruktur nach Anspruch 20, wobei der Lochgrößengradient von dem der anderen Schicht versetzt ist.


**Revendications**

1. Film perforé comprenant au moins un polymère thermoplastique, **caractérisé en ce qu'**il possède au moins l'une des propriétés suivantes :

   a) une perméabilité à l'air d'au moins 20 m$^3$/h,
   b) ou un indice Gurley de perméabilité (test ASTM) inférieur à 35 secondes,

   et dans lequel ledit polymère thermoplastique comprend un homopolymère ou un interpolymère d'éthylène, qui présente un indice de fluidité à chaud de 0,2 à 5 g/10 min, une masse volumique de 0,9 à 0,97 g/cm$^3$ et un indice de distribution des masses moléculaires Mw/Mn de 1,5 à 5.

2. Film conforme à la revendication 1, lequel film présente l'une et l'autre desdites propriétés.

3. Film conforme à la revendication 1, qui présente une densité de perforation d'au moins 54 250 $\mu$m$^2$/cm$^2$ (350 000 micromètres carrés par pouce carré).

**4.** Film conforme à la revendication 1, qui présente une densité de perforation d'au moins 77 500 $\mu$m$^2$/cm$^2$ (500 000 micromètres carrés par pouce carré).

**5.** Film conforme à la revendication 1, qui présente une densité de trous moyenne en nombre de 0,93 à 7,75 trous par centimètre carré (6 à 50 trous par pouce carré).

**6.** Film conforme à la revendication 1, dans lequel l'aire moyenne d'un trou individuel vaut de 10 000 à 70 000 $\mu$m$^2$ (micromètres carrés).

**7.** Film conforme à la revendication 1, dans lequel la taille minimale d'un trou vaut à peu près 100 $\mu$m (micromètres).

**8.** Film conforme à la revendication 1, dans lequel le polymère thermoplastique comprend en outre des polypropylènes homopolymères ou inter-polymères.

**9.** Film conforme à la revendication 1, lequel film est **caractérisé par le fait qu'**il ne contient pas d'agent de compatibilisation de type cireux.

**10.** Film conforme à la revendication 1, lequel film est **caractérisé par le fait qu'**il ne contient pas de charge inorganique.

**11.** Film conforme à la revendication 1, dans lequel le polymère thermoplastique est choisi dans l'ensemble que constituent les polymères d'éthylène linéaires ou sensiblement linéaires, **caractérisés en ce qu'**ils présentent:

1) une masse volumique de 0,87 à 0,96 g/cm$^3$,
2) un indice de distribution des masses moléculaires Mw/Mn inférieur ou égal à environ 5,
3) et un indice de fluidité à chaud I$_2$, mesuré selon la norme ASTM D-1238 à 190 °C sous 2,16 kg, de 0,5 à 20,0 dg/min,

et le polypropylène, ainsi que leurs mélanges.

**12.** Film conforme à la revendication 11, dans lequel le polymère d'éthylène linéaire ou sensiblement linéaire comprend un copolymère choisi dans l'ensemble constitué par les copolymères d'éthylène et de 1-octène, d'éthylène et de 1-butène, d'éthylène et de 1-hexène, d'éthylène et de 1-pentène, d'éthylène et de 1-heptène, et d'éthylène et de 4-méthyl-1-pentène, ainsi que leurs mélanges.

**13.** Film conforme à la revendication 1, qui comprend en outre du polystyrène d'usage général (GPPS), du polystyrène choc (HIPS), du copolymère d'acrylonitrile, de butadiène et de styrène (ABS), du copolymère d'acrylonitrile et de styrène (SAN), un nylon, des copolymères de styrène à blocs, ou un mélange de tels polymères.

**14.** Sachet d'emballage pour matériau granulaire ou pulvérulent, fait d'un film ou d'une feuille comprenant au moins un polymère thermoplastique, lequel film ou laquelle feuille est perforé(e) et possède une perméabilité à l'air d'au moins 20 m$^3$/h, et dans lequel ledit polymère thermoplastique comprend un homopolymère ou un interpolymère d'éthylène, qui présente un indice de fluidité à chaud de 0,2 à 5 g/10 min, une masse volumique de 0,9 à 0,97 g/cm$^3$ et un indice de distribution des masses moléculaires Mw/Mn de 1,5 à 5.

**15.** Sachet conforme à la revendication 14, dont l'épaisseur vaut de 25,4 à 508 $\mu$m (1 à 20 millièmes de pouce).

**16.** Sachet conforme à la revendication 14, dont l'épaisseur vaut de 50,8 à 152,4 $\mu$m (2 à 6 millièmes de pouce).

**17.** Sachet conforme à la revendication 14, qui peut contenir un poids de 10 à 100 kg de matériau.

**18.** Procédé de fabrication d'un film respirant conforme à l'une des revendications 1 à 13, comprenant les étapes suivantes :

a) choisir un polymère thermoplastique approprié pour la fabrication d'un film, lequel polymère thermoplastique comprend un homopolymère ou un interpolymère d'éthylène, qui présente un indice de fluidité à chaud de 0,2 à 5 g/10 min, une masse volumique de 0,9 à 0,97 g/cm$^3$ et un indice de distribution des masses moléculaires Mw/Mn de 1,5 à 5 ;
b) former un film à partir de ce polymère thermoplastique par coulée, ou par soufflage en opérant avec une masse fondue portée à une température de 175 à 260 °C et un rapport de soufflage de 2,5 à 3,7 ;
c) et perforer ce film dans des conditions suffisantes pour en faire ledit film respirant, lequel film respirant présente un indice Gurley de perméabilité (test ASTM) inférieur à 35 secondes.

**19.** Structure de film comprenant un film conforme à l'une des revendications 1 à 13, qui comporte au moins deux feuillets et dans laquelle le gradient de taille des trous diffère d'un feuillet à l'autre.

**20.** Structure de film conforme à la revendication 19, dans laquelle le gradient d'espacement des trous diffère d'un feuillet à l'autre.

**21.** Structure de film conforme à la revendication 20, dans laquelle les gradients de taille des trous se compensent d'un feuillet à l'autre.

# FIG. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4743123 A, Legters
- US 4310118 A, Kisida
- US 4672684 A, Barnes
- US 4834554 A, Stetler, Jr.
- EP 0776762 A
- EP 1277573 A
- US 6045923 A
- EP 0513121 A
- US 5578370 A
- EP 0337662 A
- EP 0503048 A
- EP 0391661 A
- US 5089321 A
- US 4798081 A
- US 5008204 A
- US 3645992 A
- US 5272236 A
- US 5278272 A
- US 5703187 A
- US 545403 A
- EP 416815 A
- US 702475 A
- EP 514828 A
- US 5470993 A
- US 5374696 A
- US 5231106 A
- US 5055438 A
- US 5057475 A
- US 5096867 A
- US 5064802 A
- US 5132380 A
- US 720041 A
- US 5453410 A
- US 4339507 A
- US 5844045 A, Kolthammer
- US 5869575 A
- US 6448341 A
- US 3456044 A, Pahlke
- US 4352849 A, Mueller
- US 4820557 A
- US 4837084 A, Warren
- US 4865902 A, Golike
- US 4927708 A, Herran
- US 4952451 A, Mueller
- US 4963419 A
- US 5059481 A, Lustig
- US 5288531 A, Falla
- US 5721025 A, Falla
- US 5360648 A, Falla
- US 6117465 A, Falla
- US 6723398 B, Chum
- US 4927888 A, Strait
- US 4950541 A, Tabor
- US 4762890 A, Strait
- US 5346963 A, Hughes
- US 4684576 A, Tabor
- US 6448341 B
- US 6528136 B
- US 6143829 A
- US 6359073 B
- WO 9910424 A

### Non-patent literature cited in the description

- **WILLIAMS ; WORD.** Polymer Letters. *Journal of Polymer Science,* 1968, vol. 6, 621
- **WILD et al.** Poly. Phys. Ed. *Journal of Polymer Science,* 1982, vol. 20, 441
- **RANDALL.** *Rev. Macromol. Chem. Phys.,* vol. C29 (2&3), 285-297
- **RANDALL.** *Rev. MacromoL Chem. Phys.,* vol. C29 (2&3), 285-297
- **ZIMM, G.H. ; STOCKMAYER, W.H.** *J. Chem. Phys.,* 1949, vol. 17, 1301
- **RUDIN, A.** Modern Methods of Polymer Characterization. John Wiley & Sons, 1991, 103-112
- Dow Chemical Company. **A. WILLEM DEGROOT ; P. STEVE CHUM.** conference of the Federation of Analytical Chemistry and Spectroscopy Society (FACSS) in St. Louis. 04 October 1994
- **M. SHIDA ; R.N. SHROFF ; L.V. CANCIO.** *Polymer Engineering Science,* 1977, vol. 17 (11), 770
- **JOHN DEALY.** Rheometers for Molten Plastics. Van Nostrand Reinhold Co, 1982, 97-99
- **RAMAMURTHY.** *Journal of Rheology,* 1986, vol. 30 (2), 337-357
- The Encyclopedia of Chemical Technology. John Wiley & Sons, 1981, vol. 16-18, 416-417191-192
- **C. GLENN DAVIS.** *Packaging Machinery Manufacturers Institute,* 2000

- The Wiley Encyclopedia of Packaging Technology. John Wiley & Sons, 364-369

- Plastic Films. **KENTON R. OSBORN ; WILMER A JENKENS.** Technology and Packaging Applications. Technomic Publishing Co., Inc, 1992, 39-105